(19) Europäisches Patentamt
European Patent Office
Office européen des brevets

(11) Veröffentlichungsnummer : **0 368 094 B1**

(12) # EUROPÄISCHE PATENTSCHRIFT

(45) Veröffentlichungstag der Patentschrift : **06.05.92 Patentblatt 92/19**

(51) Int. Cl.$^5$ : **C08J 7/04,** B32B 27/18, C08L 69/00, C09D 151/00

(21) Anmeldenummer : **89119970.5**

(22) Anmeldetag : **27.10.89**

(54) **Schlagzähe, UV-Absorber-haltige Methacrylatschutzschicht für Polycarbonat.**

(30) Priorität : **05.11.88 DE 3837588**

(43) Veröffentlichungstag der Anmeldung : **16.05.90 Patentblatt 90/20**

(45) Bekanntmachung des Hinweises auf die Patenterteilung : **06.05.92 Patentblatt 92/19**

(84) Benannte Vertragsstaaten : **AT BE CH DE ES FR GB IT LI NL SE**

(56) Entgegenhaltungen : **DE-A- 2 832 676**

(73) Patentinhaber : **RÖHM GMBH**
**Kirschenallee**
**W-6100 Darmstadt (DE)**

(72) Erfinder : **Gross, Heinz, Dr.**
**Ringstrasse 137**
**W-6101 Rossdorf 1 (DE)**
Erfinder : **Fischer, Jens-Dieter, Dr.**
**Moosbergstrasse 95**
**W-6100 Darmstadt (DE)**
Erfinder : **Siol, Werner, Dr.**
**Goerdelerweg 34**
**W-6100 Darmstadt-Eberstadt (DE)**
Erfinder : **Süfke, Thomas, Dr.**
**An der Fuchsenhütte 27**
**W-6101 Rossdorf (DE)**
Erfinder : **Rhein, Thoma, Dr.**
**Talstrasse 79**
**W-6501 Stadecken-Elsheim (DE)**

**EP 0 368 094 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

### Gebiet der Erfindung

Die Erfindung betrifft mehrschichtige Kunststoff-Formkörper, die zum überwiegenden Teil aus aromatischem Polycarbonat bestehen, und die zum Schutz gegen die Wirkung von UV-Strahlung an ihrer Oberfläche mit einer UV-Absorber-haltigen Polymethacrylat-Kunststoffschicht ausgerüstet sind.

### Stand der Technik

Polycarbonatkunststoffe haben eine nur begrenzte Wetterfestigkeit. Vor allem durch UV-Strahlung werden sie geschädigt, was sich im Mattwerden ursprünglich glänzender Oberflächen äußert. Das Mattwerden ist das sichtbare Erscheinungsbild des durch die UV-Strahlung bewirkten Makromolekülabbaus, unter Ausbildung einer Vielzahl feinster Haarrisse, beginnend in der Kunststoffoberfläche. In den Kunststoff eingebrachte UV-Absorber vermögen das Innere eines Kunststoffkörpers, wie z.B. einer Kunststofftafel aus Polycarbonat zu schützen, jedoch nicht die Oberfläche. Zu deren Schutz wird nach der deutschen Auslegeschrift 1 694 273 (= US 3 582 398) eine Lackschicht aus Polymethylmethacrylat, die noch einen UV-Absorber enthält, aus einer Lösung dieser Schutzschichtkomponenten aufpräpariert.

Auch die US 4 666 779 beschreibt UV-stabilisierte Artikel aus thermoplastischen Substraten, insbesondere solche aus Polycarbonaten, die mit einer Schutzschicht aus einem Copolymeren, das im wesentlichen aus Methylmethacrylateinheiten und aus 0,5 bis 10 % der Anzahl der Monomereinheiten aus anderen Methacrylateinheiten, nämlich Ethylmethacrylat, n-Butylmethacrylat, i-Butylmethacrylat oder Mischungen derselben und aus 0 bis 5 % der Anzahl der Monomereinheiten aus anderen $\alpha,\beta$-ungesättigten Monomereinheiten besteht. Die Polymethacrylatschutzschicht wird als Lösung auf das Substrat aufgetragen, wobei die zur UV-Stabilisierung benötigten niedermolekularen UV-Stabilisatoren mit dem Polymer-Lösungsmittel-System eingebracht werden.

Daneben sind noch aus der US 4 576 870 und der EP-A 0 203 487 Kunststoffkörper bekannt, bei denen die UV-absorbierende Schutzschicht ein Copolymerisat von im wesentlichen (Meth)acrylester-Monomeren und UV-Schutzgruppen-haltigen Monomeren ist. Diese Schutzschichten sind im allgemeinen noch spröder als die oben beschriebenen, niedermolekularen UV-Absorber-haltigen Schutzschichten.

Gemäß der DE-A 2 832 676 wird eine Polymethylmethacrylatschicht mit einem genügenden Gehalt an einem UV-Absorber bei der Herstellung einer Polycarbonat-Kunststofftafel durch Coextrusion aufgebracht. Nach der DE-A 3 244 953 (=EP-A 110 238) wird ein verbesserter Verbundkörper dadurch erhalten, daß auf die UV-Absorber-haltige Kunststoffschicht, die Polymethylmethacrylat oder auch Polycarbonat sein kann, noch eine weitere, im wesentlichen wenig UV-Absorber enthaltende Deckschicht aus Polymethylmethacrylat bzw. (Meth)acrylat-Copolymeren, bei dem Mehrstoffextrusionsvorgang aufgebracht wird.

In allen im Stand der Technik beschriebenen Fällen werden bevorzugt Polymethacrylatkunststoffe, insbesondere Polymethylmethacrylat, oder auch Copolymere von Methylmethacrylat und untergeordneten Mengen an $C_2$- bis $C_{10}$-Alkyl- bzw. Aryl(meth)acrylestern, als die UV-Schutz enthaltende Deckschicht verwendet, weil sie hochwitterungsbeständig sind und ihre Oberflächen weniger als die von Polycarbonaten - EP-B 110 221 beschreibt UV-Absorber-haltige Polycarbonatdeckschichten -durch UV-Strahlung geschädigt werden.

Der Nachteil der bekannten, UV-Absorber enthaltenden Polymethacrylat-Deckschichten für Polycarbonatkunststoffe ist, daß sie auf dem abzudeckenden Polycarbonat nur ungenügend haften, und daß sie - im Vergleich zu Polycarbonaten - geringere Zähigkeiten besitzen. Diese ungenügend vorhandenen Eigenschaften wirken sich insbesondere bei mechanischen Weiterverarbeitungen der mehrschichtigen Kunststoff-Formkörper, wie z.B. beim Biegen derselben, nachteilig auf den gesamten Kunststoffverbund aus.

### Aufgabe und Lösung

Ziel der Erfindung war es, mehrschichtige Kunststoff-Formkörper, die zum überwiegenden Teil aus Polycarbonat bestehen, zu schaffen, deren unmittelbar auf den Polycarbonatkunststoff aufgebrachte, UV-Absorber enthaltende Polymethacrylatschicht auf dem zu schützenden polycarbonathaltigen Kunststoffkörper dauerhaft haftet, um damit an dem Gesamtkörper die bisher durch die Polymethylmethacrylatschicht verursachte Verschlechterung seiner mechanischen Eigenschaften, wie insbesondere Verschlechterungen der Biegefestigkeit oder Bruchfestigkeit, wieder rückgängig zu machen.

Es wurde überraschend gefunden, daß die geschilderten Nachteile der aus dem Stand der Technik bekannten Deckschichten vermieden werden, aber deren Schutzwirkung voll erhalten bleibt, wenn die mehrschichtigen Kunststoffkörper auf Polycarbonat-Basis so aufgebaut sind, daß dem zu schützenden

Polycarbonat-Kernmaterial eine UV-Absorber-haltige Polymethacrylatschicht aufgebracht ist, die ein schlagzähmodifizierter Polymethacrylatkunststoff ist, und deren eine Phase aus Methacrylatcopolymeren besteht, die für sich, wie auch der schlagzähmodifizierte Polymethacrylatkunststoff, mit Polycarbonat, insbesondere dem Polycarbonat des Bisphenol A, verträgliche Mischungen bilden.

Die Erfindung ist ein mehrschichtiger Kunststoffkörper mit einer Kernschicht aus mehr als 50 Gew.-% aromatischem Polycarbonat und einer darauf angebrachten, UV-Absorber enthaltenden, thermoplastischen, schlagzäh-modifizierten Polymethacrylatkunststoffschicht, und der noch mit weiteren Schichten belegt sein kann, dadurch gekennzeichnet, daß die Polymethacrylatkunststoffschicht ein zweiphasiges Mischpolymerisat ist, die in Mengen von 0,01 bis 50 Gew.-% UV-Absorber bzw. UV-absorbierende Gruppen enthält, und das zweiphasige Mischpolymerisat aus

(A) 10 bis 90 Gew.-%, gegebenenfalls vernetzten Polymeren P mit einer Glastemperatur Tg$\leqq$10 Grad C, bevorzugt Tg $\leqq$-10 Grad C, in das 0 bis 30 Gew.-%, bezogen auf P eines polymerisierbaren UV-Absorbers eingebaut werden kann und

(B) 90 bis 10 Gew.-% eines mit (A) wenigstens teilweise kovalent verknüpften Methylmethacrylat-Copolymerisats mit einer Glastemperatur Tg $\geqq$30 Grad C, aufgebaut aus

(b1) 99,9 bis 5 Gew.-%, insbesondere 95 bis 20 Gew.-% Methylmethacrylateinheiten und gegebenenfalls weiteren $\alpha,\beta$-ungesättigten Monomereinheiten in Mengen von 0 bis 40 Gew.-%, und

(b2) 0 bis 50 Gew.-% eines polymerisierbaren UV-Absorbers, sowie

(b3) aus 0,1 bis 95 Gew.-%, insbesondere 5 bis 80 Gew.-% Acrylat- und/oder Methacrylateinheiten mit carbocyclischen Gruppen im Esterrest der Formel I

$$H_2C = \overset{R}{\overset{|}{C}} - \overset{O}{\overset{\|}{C}} - O - R_1 \qquad I,$$

worin

R : H oder $CH_3$ und

$R_1$: Y oder A-Y sind, wobei

Y ein Cycloalkyl- oder ein einfach oder mehrfach alkylsubstituierter Cycloalkylrest mit 5 bis 12 C-Atomen, oder ein gegebenenfalls alkyl- bzw. oxyalkylsubstituierter Arylrest mit 6 bis 12 C-Atomen und A eine Alkylengruppe, die auch verzweigt sein kann, mit 1 bis 6 C-Atomen oder eine Oxyalkylengruppe mit 2 bis 4 C-Atomen sind,

besteht,

wobei das Copolymerisat (B) für sich ein Molekulargewicht $M_w \geqq 30.000$ hätte und eine beliebige Mischung aus aromatischem Polycarbonat (PC) und des Copolymerisates (B) verträglich ist, und diese eine untere kritische Lösungstemperatur (LCST) von $\geqq$120 Grad C besitzt.

Die Erfindung betrifft weiter ein Verfahren zur Herstellung eines mehrschichtigen Kunststoffkörpers mit einer Kernschicht aus mehr als 50 Gew.-% aromatischem Polycarbonat und einer darauf angebrachten UV-Absorber enthaltenden, thermoplastischen Polymethacrylatkunststoffschicht, und der noch mit weiteren Schichten belegt sein kann, dadurch gekennzeichnet, daß die UV-Absorber enthaltende, thermoplastische Polymethacrylatkunststoffschicht ein schlagzähmodifiziertes, mit dem Polycarbonat verträgliches Polymethacrylatcopolymerisat ist und durch Coextrusion oder durch Lackierung in Schichtdicken von 1 bis 500 $\mu$m auf die Kernschicht aufgebracht wird.

Die den UV-Schutz bringenden Zusätze können als bekannte, niedermolekulare, lösliche UV-absorbierende Verbindungen dem zweiphasigen Mischpolymerisat (A) - (B) vor dessen Aufbringung auf den Polycarbonatkunststoff zugesetzt werden, oder polymerisierbare Verbindungen, die UV-absorbierende Strukturen in dem Molekül enthalten, das sind die sogenannten und bekannten polymerisierbaren UV-Absorber, werden bei der Herstellung von (A) und/oder (B) mit einpolymerisiert. Als UV-Schutz kann die Polymethacrylatkunststoffschicht auch beide UV-Absorberspezies enthalten. (Vgl. R. Gächter u. H. Müller, Taschenbuch der Kunststoff-Additive, S. 96 - 111, Carl Hanser Verlag 1979)

Die erfindungsgemäße UV-absorbierende, schlagzähe und auf dem Polycarbonatkunststoff gut haftende Polymethacrylatschicht wird weiter erfindungsgemäß nach bekannten Methoden, wie Coextrusion und Lackierung, auf den zu schützenden Kunststoff, der zum überwiegenden Teil aus aromatischem Polycarbonat, insbesondere dem Polycarbonat des Bisphenol A, besteht, aufgebracht. Im Bedarfsfall kann die Polymethacrylatschicht mit einer weiteren Deckschicht, z.B. einer witterungsbeständigen Polymethylmethacrylatschicht, überzogen sein, wobei diese Schicht bei der Coextrusion gleichzeitig mit den anderen Schichten

angelegt, oder auch durch nachträgliche Lackierung, wie z.B. eine Kratzfestbeschichtung auf der Grundlage von Silikonharzen oder vernetzter Polyacrylate aufgebracht werden kann.

Die Methacrylatcopolymerisate (B) sind für sich thermoplastisch zu glasklaren, farblosen Massen verarbeitbar. Im wesentlichen beschrieben sind solche mit aromatischem Polycarbonat kompatiblen Methacrylatcopolymerisate (B) aus (b1) und (b3) in der noch nicht veröffentlichten deutschen Patentanmeldung P 37 19 239.6.

Beispiele solcher Acryl- und Methacrylester - Comonomeren der Formel I - d.h. mit carbocyclischen Gruppen im Esterrest - sind Cyclopentylmethacrylat, Cyclohexylacrylat, Cyclohexylmethacrylat, 3,3,5-Trimethylcyclohexylmethacrylat, 4-t-Butylcyclohexylacrylat, 4-t-Butylcyclohexylmethacrylat, 3-Cyclohexylpropylmethacrylat, Phenylmethacrylat, 4-t-Butylphenylmethacrylat, 4-Methoxyphenylmethacrylat, Benzylmethacrylat, 1-Phenylethylmethacrylat, 2-Phenylethylacrylat, 2-Phenylethylmethacrylat, 3-Phenylpropylacrylat, 3-Phenylpropylmethacrylat, 2-Phenoxyethylmethacrylat, 2-Naphthylmethacrylat. Acryl- bzw. Methacrylamide, die nach DE-A 36 32 946 (= US 4 749 749) auch Polymethacrylatharz verträglich machende Comonomere sind, können in (B) mit einpolymerisiert sein. Solche Monomere sind beispielsweise N-Cyclohexylacrylamid, N-Cyclohexylmethacrylamid, N-2-Methylcyclohexylmethacrylamid, N-Phenylmethacrylamid, N-Benzylmethacrylamid

Die in den genannten Patentschriften beschriebenen Methacrylatcopolymerisate geben mit aromatischem Polycarbonat, insbesondere dem Polycarbonat von Bisphenol A, die dort beschriebenen voll kompatiblen Polymermischungen, die sich durch hohe Transparenz auszeichnen.

Auch N-carbocyclisch substituierte Maleinimid-Comonomere, wie N-Cyclohexylmaleinimid, N-2- bzw. 4-Methylcyclohexylmaleinimid, N-3,3,5-Trimethylcyclohexylmaleinimid, N-4-Ethylcyclohexylmaleinimid, N-2-Phenylcyclohexylmaleinimid vermitteln nach der deutschen Patentanmeldung DE 37 09 562 (veröffentlicht am 6.10.1988) Methylmethacrylat-Polymeren Verträglichkeit mit aromatischen Polycarbonaten.

**Durchführung der Erfindung**

1. Der Polycarbonat- (PC) -Kunststoff.

Der erfindungsgemäße Kunststoffkörper besteht zum überwiegenden Anteil aus dem vor UV-Licht zu schützenden aromatischen Polycarbonat. Als aromatische Polycarbonate finden vor allem Polycarbonate des Bisphenol A technische Verwendung. Polycarbonate des Bisphenol A sind glasklare, zähe Kunststoffe und z.B. unter der Bezeichnung $^{R}$Makrolon im Handel. Die Molekulargewichte $M_w$, in g pro Mol, wie sie beispielsweise mit Hilfe der Gelpermeations-Chromatographie oder mit der Streulichtmethode bestimmbar sind, der diesen Kunststoffen zugrundeliegenden Carbonatpolymeren liegen im Bereich von etwa 20.000 bis 60.000, insbesondere 20.000 bis 40.000, und die Vicat-Erweichungstemperaturen, VET, dieser Polymeren, gemessen nach DIN 53460, liegen bei 140 Grad C bis 160 Grad C.

Der PC-Kunststoff kann zur Herstellung des erfindungsgemäßen Kunststoffkörpers in vorgefertigter Gestalt, z.B. in Form massiver Platten, in Form von Hohlkammerplatten, in Form von Kuppeln oder in Form praktisch jeglicher, ausdenkbarer Gestalt, eingesetzt werden, wobei dann die schutzbringende Schicht vorzugsweise durch Lackierung aufgebracht wird. Für die in Coextrusion herzustellenden erfindungsgemäßen Formteile können die Polycarbonate und die zu deren Schutz aufzubringende Methacrylatschicht aus (A) und (B) in der üblichen, für Extrusion geeigneten Form und Qualität, z.B. als Granulate oder Pulver, vorliegen.

Als PC-Kunststoffe können zur Herstellung der erfindungsgemäßen Kunststoffkörper vorteilhaft auch verträgliche Polymermischungen eingesetzt werden, die zum überwiegenden Teil, d.h. aus 99,9 bis 80 Gew.-%, aus aromatischem Polycarbonat, insbesondere dem Polycarbonat des Bisphenol A, bestehen, und deren Legierungskomponenten, d.h. in Mengen von 0,1 bis 20 Gew.-%, aus einem oder mehreren Methacrylatcopolymeren (B) und/oder dem zweiphasigen Mischpolymerisat aus (A) und (B) bestehen, die - wie schon ausgeführt - voll kompatibel mit dem aromatischen Polycarbonat sind.

2. Das zweiphasige Mischpolymerisat aus (A) und (B) gewährleistet durch seinen Aufbau und mit den in der Copolymerisatschicht enthaltenen UV-Absorbern einen dauerhaften UV-Schutz des Polycarbonatkunststoffes, auch unter bzw. nach stärkerer mechanischer Belastung. Es ist ein schlagzähes, transparentes und mit dem Polycarbonatkunststoff (PC) kompatibles Material, wie es im wesentlichen in den noch nicht veröffentlichten deutschen Patentanmeldungen P 37 43 199.4 und P 38 03 405.0 beschrieben ist.

Für die Herstellung der erfindungsgemäß schlagzäh eingestellten UV-Schutzschichten werden als Zähphase (A) Polymere P mit einer Glastemperatur $Tg \leqq 10$ Grad C, vorzugsweise $\leqq -10$ Grad C, eingesetzt, worunter Polymerisate fallen, die gewöhnlich unter der Bezeichnung Kautschuk zusammengefaßt werden. Die Polymeren der Komponente (A) sind gegebenenfalls vernetzt. Ihre Glastemperatur, Tg-Bestimmung kann nach Edith. A. TURI "Thermal Characterization of Polymeric Materials", S. 169 ff., Academic Press, New York 1981,

vorgenommen werden.

Als Polymere P für die Zähphase (A) werden vorzugsweise solche ausgewählt aus der Gruppe, bestehend aus Polyolefinen, Polydienen, Ethylen-Vinylacetat-Copolymeren, Polyacrylaten, Polysiloxane, (s. dazu Ullmann's Encyclopädie der technischen Chemie, 4. Auflage, Band 13, Seiten 595 bis 635, Verlage Chemie 1977). Herstellungsweisen dieser Kautschuke mit ihren Eigenschaften, wie Löslichkeiten und Viskositäten, sowie ihre Molekularmassen $M_w$, sind in der angegebenen Literaturstelle angegeben.

Bevorzugt als Zähphasen (A) sind Terpolymerisate aus Ethylen, Propylen und einem Dien, die sogenannten EPDM-Typen, und besonders bevorzugt Acrylatkautschuke, insbesondere auf Basis Butylacrylat. Diese Polyacrylate werden vorzugsweise durch Polymerisation in wäßriger Emulsion, teilweise auch in Suspension nach einschlägig bekannten Verfahren hergestellt (Ullmann's Encyclopädie der technischen Chemie, 4. Auflage, Band 19, Seiten 125 bis 137, Verlag Chemie 1980).

Für die Herstellung des mit (A) verbundenen Methylmethacrylat-Copolymerisats (B) sind die in die Polymerkomponente einzubauenden Monomeren der Formel I bekannt. Sie sind dafür neben anderen, als essentielle Comonomere für Methylmethacrylat in der schon oben genannten deutschen Patentanmeldung P 37 19 239.6 beschrieben. In einer bevorzugten Ausführungsform steht R für $CH_3$, d.h. bevorzugt leiten sich die Monomeren I von der Methacrylsäure ab. Für I seien beispielhaft genannt, insbesondere Phenylmethacrylat, Benzylmethacrylat, Phenylethylmethacrylat, Phenylethylacrylat, Cyclohexylmethacrylat.

Das zweiphasige Mischpolymerisat (A) - (B) besteht in Mengen von 10 bis 90 Gew.-%, vorzugsweise in Mengen von 10 bis 60 Gew.-%, und vor allem in Mengen von 20 bis 50 Gew.-% aus Polymeren P und in Mengen von 90 bis 10 Gew.-%, vorzugsweise in Mengen von 90 bis 40 Gew.-%, und vor allem in Mengen von 80 bis 50 Gew.-% aus dem Copolymerisat (B), das wenigstens teilweise kovalent mit den die Polymerphase (A) bildenden Polymeren P verknüpft ist.

Das Copolymerisat (B) ist aus 99,9 bis 5 Gew.-%, insbesondere aus 95 bis 20 Gew.-%, und vor allem aus 80 bis 40 Gew.-% Methylmethacrylateinheiten und aus 0,1 bis 95 Gew.-%, insbesondere 5 bis 80 Gew.-% und vor allem aus 20 bis 50 Gew.-% Acryl- und/oder Methacrylmonomeren der Formel I aufgebaut. Es kann in Mengen von 0 bis 40 Gew.-%, insbesondere in Mengen von 0,5 bis 20 Gew.-%, weitere $\alpha$,ß-ungesättigte Verbindungen, wie beispielsweise Styrol, $\alpha$-Methylstyrol, Acrylsäure, Methacrylsäure, $C_1$- bis $C_6$-Ester der Acrylsäure, wie Methylacrylat und weitere Ester ($C_2$- bis $C_6$-Ester) der Methacrylsäure, wie Ethylmethacrylat und die schon oben genannten carbocyclisch substituierten Acryl- und Methacrylamide, einpolymerisiert enthalten. Auch der Einbau von Verbindungen mit mehreren polymerisierbaren Doppelbindungen, d.h. von Vernetzern, ist möglich und gegebenenfalls zweckmäßig.

Die Methacrylat-Copolymerisate (B) sind als solche Polymere mit Glastemperaturen Tg $\geqq$30 Grad C, die für sich zu farblosen Formkörpern thermoplastisch verarbeitbar sind, mit Vicat-Erweichungstemperaturen, VET, gemessen nach DIN 53460, von etwa 100 bis 150 Grad C, und die mit aromatischem Polycarbonat verträgliche Mischungen bilden.

Die Herstellung der zweiphasigen Mischpolymerisate (A) - (B) für die erfindungsgemäß schlagzähmodifizierte Deckschicht kann in Anlehnung an bekannte Verfahren vorgenommen werden:

Im allgemeinen gibt man das Polymerisat P der Phase (A) vor, beispielsweise in Form einer Lösung in einem zur weiteren Verarbeitung geeigneten Lösungsmittel, beispielsweise in einem für die radikalische Polymerisation der Monomeren gemäß (B) geeigneten Lösungsmittel (H. Rauch-Puntigam, Th. Völker, "Acryl- und Methacrylverbindungen", Seiten 230 bis 234, Springer-Verlag, Heidelberg 1967; J. Brandrup, E.H. Immergut, Polymer Handbook, III-144 bis III-148, John Wiley 1975). Dabei ist u.a. die Tendenz der Lösungsmittel zu Übertragungsreaktionen zu berücksichtigen. Genannt seien als Lösungsmittel z.B. Ester wie Butylacetat, Ethylacetat, Kohlenwasserstoffe wie Toluol, Ketone wie Aceton. Man geht im allgemeinen von Lösungen mit einem Gehalt von etwa 15 bis 50 Gew.-% des Polymeren P aus, denen die Monomeren und Polymerisationshilfsmittel beispielsweise durch Zulauf zugesetzt werden. Die Polymerisation wird in der Regel bei erhöhter Temperatur, beispielsweise im Bereich 80 bis 140 Grad C, durchgeführt. Als Initiatoren können die an sich üblichen, wie Peroxide oder Azoverbindungen verwendet werden (vgl. H. Rauch-Puntigam, Th. Völker, Acryl - und Methacrylverbindungen loc.cit.). Bei tiefer siedenden Lösungsmitteln ist z. B. Dibenzoylperoxid anwendbar, während bei höher siedenden Lösungsmitteln, z.B. tert.-Butylverbindungen, wie tert.-Butylperoctoat, zweckmäßig Anwendung finden können.

Bei Pfropfung von EPDM kann beispielsweise mit Butylacetat als Lösungsmittel zunächst bei ca. 120 Grad C die Polymerisation der Monomeren zur Komponente (B) durchgeführt und anschließend bei ca. 80 Grad C, unter Zusatz von weiterem Methylmethacrylat, Vernetzer und Initiator, diese zu Ende geführt werden. Die Polymerisation kann zweckmäßigerweise in Gegenwart von Reglern, z.B. Merkaptanen, durchgeführt werden.

Bevorzugt wird das zweiphasige Mischpolymerisat (A) - (B) als Emulsionspolymerisat in wäßrigem Medium hergestellt, wobei vor allem Polybutylacrylat oder eine wesentlich aus Polybutylacrylat bestehende Phase als Phase (A) hergestellt wird, auf die als Kern eine oder mehrere Schalen aus (B) durch Polymerisation nach

bekannten Methoden der Emulsionspolymerisation aufgebracht werden (loc.cit. Ullmann, Band 13 und Ullmann, Band 19). Die Zähphase (A) kann auch zunächst auf ein hartes Primärteilchen, z.B. ein Polymethylmethacrylatteilchen, aufpolymerisiert werden. Dadurch sind auch brauchbare, mehr als zweischalige Mischpolymerisate (A) - (B) herstellbar. Die Emulsionspolymerisation der einzelnen Schalen wird nacheinander bei Temperaturen von etwa 30 bis 100 Grad C in Gegenwart wasserlöslicher Polymerisationsinitiatoren, wie z.B. Kaliumpersulfat oder Redoxsystemen mit z.B. Metallionen wechselnder Wertigkeit, wie z.B. $Fe^{II}/Fe^{III}$ durchgeführt. Herstellbar sind Dispersionen mit etwa 30 bis 60 Gew.-% Feststoffgehalt mit Teilchengrößen (Radien) des Feststoffes von 10 bis 300 nm. Bevorzugt werden Dispersionen deren Teilchen Radien von 20 bis 100 nm haben.

Vorteilhafterweise gewinnt man das zwei- bzw. mehrphasige Mischpolymerisat aus der Lösung durch Ausfällen, beispielsweise mit Methanol als Fällungsmittel. Bei Herstellung des Polymerisates durch Emulsionspolymerisation, gewinnt man dieses durch Gefrierkoagulation, oder durch Sprühtrocknung oder vorteilhafterweise durch Abquetschen des Emulsionspolymerisates mit Hilfe eines Extruders.

3. Die UV-Absorber

sind in der Polymethacrylatschicht in Mengen von 0,01 bis 50 Gew.-%, insbesondere in Mengen von 0,1 bis 30 Gew.-% und vor allem in Mengen von 1 bis 20 Gew.-%, vorhanden. Die UV-Absorber können als niedermolekulare, d.h. mit Molekulargewichten $M_w \leqq 5000$, homogen in der Polymethacrylatschicht (A) - (B) verteilt, d.h. gelöst sein, und/oder die polymeren Phasen (A) und/oder (B) enthalten UV-absorbierende Teilstrukturen durch Einbau copolymerisierbarer Verbindungen, den bekannten polymerisierbaren UV-Absorbern, wie sie beispielsweise in der US 45 76 870 beschrieben sind. Als polymerisierbare UV-Absorber seien beispielhaft genannt 2-(2′-Hydroxyphenyl)-5-methacrylamido-benzotriazol oder 2-Hydroxy-4-methacryloxybenzophenon. (Vgl. auch Houben-Weyl, 4. Aufl., Bd. 15, S. 256 - 260, Verlag Chemie)

Die polymerisierbaren Verbindungen lassen sich aber auch in ihrer monomeren Form als niedermolekulare, lösliche UV-Absorber in der Polymethacrylatschicht (A) - (B) vorteilhaft einsetzen. Weitere UV-Absorber mit einem Molekulargewicht $M_w \leqq 5000$ sind 2-Hydroxy-4-n-octoxybenzophenon, 2-Hydroxy-4-methoxybenzophenon, 2-(2′-Hydroxy-5′-methylphenyl)benztriazol und andere Abkömmlinge des 2-Hydroxy-benzophenons oder Benzotriazols, ferner 2,4-Dihydroxy-benzoylfuran, Salicylsäurephenylester, Resorcindisalicylat, Resorcinmono- und di-benzoat, Benzylbenzoat, Stilben, β-Methylumbelliferon und dessen Benzoat. Zahlreiche weitere UV-Absorber sind bekannt und im Handel erhältlich. Besonders bevorzugt sind UV-Absorber von geringer Flüchtigkeit bei der Verarbeitungstemperatur, d.h. besonders solche mit möglichst hohem Molekulargewicht. Der UV-Absorber soll in der gewählten Konzentration in der Polymethacrylatschicht möglichst homogen verteilt sein. Die PC-haltige Kernschicht kann völlig frei von UV-Absorbern sein oder enthält diese in deutlich geringerer Konzentration als die Deckschicht. Eine Konzentration von 0,5 Gew.-% wird nicht überschritten.

Als homogen mischbare UV-Absorber mit Molekulargewichten von $\leqq 5000$ und von geringer Flüchtigkeit sind auch solche geeignet, die in ihrem Molekülaufbau mehrere UV-absorbierende Teilstrukturen, auch verschiedener chemischer Konstitution, enthalten. Solche Oligomere lassen sich nach bekannten Polykondensationsreaktionen mehrfunktioneller Ausgangsverbindungen oder durch Polymerisationsreaktionen bekannter polymeriserbarer UV-Absorber (s. beispielsweise US 4 576 870), auch durch Mitpolymerisation weiterer üblicher Comonomerer, erhalten. Durch Einstellung geeigneter Kondensationsbedingungen und Polymerisationsbedingungen (z . B. Startermenge, Übertragungsreglermenge) lassen sich Molekulargewichte $\leq 5000$ einstellen.

Die UV-Absorber-haltige Deckschicht (A) - (B) wird durch Coextrusion oder Lackierung in Schichtdicken von 1 bis 500 µm, in der Regel von 1 bis 100 µm, vor allem in Schichtdicken bis etwa 50 µm, nach ansonsten bekannten Techniken aufgebracht. Bei der Extrusionstechnik verwendet man bekannte Mehrstoff-Schlitzdüsen. Die Extrusion erfolgt bei Temperaturen zwischen 240 und 300 Grad C. Bei der Lackierung muß man mit Lösungsmitteln arbeiten, in denen das System (A) - (B) löslich oder stark quellbar ist. Beispielsweise läßt sich hierzu 1-Methoxypropanol-2 verwenden.

Die erfindungsgemäß als Schutzschichten für Polycarbonat-Kunststoffe wegen ihrer guten Haftung und ihrer Zähigkeit ausgezeichneten Methacrylat-Copolymeren (A) - (B), bilden entsprechend der Kriterien nach der "Transition Temperature Method" und nach der "Optical Method", wie sie für verträgliche Polymermischungen gefordert und im Kapitel "Compatible Polymers" in Polymer Handbook, Second Edition, Copyright © 1975, by John Wiley & Sons; III, 211, beschrieben sind, mit dem Polycarbonat des Bisphenol A, wie in der noch nicht veröffentlichten deutschen Anmeldung P 38 03 405.0 beschrieben, verträgliche Mischungen. Diese verträglichen Mischungen lassen sich weiter durch ihr LCST-Verhalten (D.R. Paul, Polymer Blends and Mixtures, 1985, S. 1 - 3; Martinus Nijhoff Publishers, Dordrecht, Boston Lancaster; Kirk-Othmer, 3 rd. Ed. Vol. 18, pg 443 - 478, J. Wiley, 1982) so charakterisieren, daß sie eine untere kritische Lösungstemperatur (LCST) von

≧120 Grad C, besonders ≧150 Grad C besitzen. Experimentell wird dazu der Trübungspunkt $T_{Tr}$ (Trübungstemperatur) bestimmt, z.B. auf der Kofler-Heizbank (Chem. Ing.-Technik 1950, S. 289), der den, von der qualitativen und quantitativen Mischungszusammensetzung abhängigen, Phasenübergang homogen nach heterogen des Gemisches charakterisiert.

**Vorteile der Erfindung**

Die erfindungsgemäßen mehrschichtigen Kunststoffkörper auf Polycarbonatbasis finden vor allem im Freien, z.B. als Verglasungs- und Bauelemente, ihre Anwendung, wo sie dem Sonnenlicht und den herrschenden Witterungsbedingungen ausgesetzt sind. Versuche zur Bewitterung, wie Versuche im Xenotest bzw. im QUV-Test (DIN 53 387) und im Hagelschußversuch, zeigen die deutliche Überlegenheit der neuen Materialien gegenüber den Vergleichsmaterialien nach dem bisherigen Stand der Technik. Der Hagelschußversuch dient dazu, Materialien auf ihre Hagelschlagfestigkeit zu überprüfen, da in der Vergangenheit durch Verwendung weniger hagelschlagfester Materialien, z.B. beim Gewächshausbau, schwere Schäden durch Hagelschlag entstanden. Durch die Erfindung werden durch UV-Strahlung bedingte Schädigungen des Kunststoffes vermieden, wodurch auch weitere zerstörerische Einwirkungen, wie Hagelschlag, keine Schäden mehr verursachen.

Der Hagelschlagversuch ist ein nicht genormter, firmeneigener Test, bei dem z.B. Platten mit Polyamidkugeln verschiedener Größe und verschiedener kinetischer Energien beschossen werden. Die bei den Versuchen angegebenen Hagelschlagenergiewerte (HE) geben die Energien in Joule [J] an, bei der der Verbund Schutzschicht/Substrat bricht.

Weitere Meßgrößen zur Oberflächencharakterisierung und damit der Nachweis der erfindungsgemäßen Vorteile, sind die Bestimmung der Oberflächenrauhigkeit mit dem Perthometer nach DIN 4768, die Bestimmung des Oberflächenglanzes, der Reflektometerwert nach DIN 67530, der Gelbwert nach DIN 6167 und die Bestimmung der Schichtdicke der UV-Absorber-haltigen Schicht, z.B. nach US 4 477 521.

**Beispiele 1 - 4**

Herstellung der Materialien für die (Meth) acrylat-Schutzschichten.

**Beispiel 1**

Erfindungsgemäßes schlagzäh-modifiziertes (Meth) acrylat-Copolymerisat durch Emulsionspolymerisation.

In einem Reaktionsgefäß werden 770 g Wasser (dest.), 0,5 g Essigsäure (100 %ig), 0,04 g Eisen- (II) -sulfat, 18g C15-Paraffinsulfonat und 125 g einer Monomeremulsion I vorgelegt.
Die Polymerisation wird bei Raumtemperatur mit 0,15 g Diisopropylbenzolmonohydroperoxid und 1,3 g Natriumhydroxymethylsulfinat gestartet. Nach Erreichen der Temperaturspitze erfolgt die Zugabe der restlichen Monomeremulsion I, die insgesamt aus 730 g Wasser (dest.), 3,4 g C15-Paraffinsulfonat, 772 g Butylacrylat und 23,5 g Allylmethacrylat besteht und mit 1,26 g Diisopropylbenzolmonohydroperoxid und 0,32 g Natriumhydroxyethylsulfinat initiiert wird. Nach Reaktionsende wird die erhaltene Dispersion auf 90 Grad C aufgeheizt und anschließend die Monomeremulsion II, bestehend aus 2705 g Wasser (dest.), 4,2 g C15-Paraffinsulfonat, 2,2 g Kaliumperoxodisulfat, 709,8 g Methylmethacrylat, 668,4 g Phenylmethacrylat, 73,9 g 3-(2-Benzotriazolyl)-2-hydroxy-5-tert.-octylbenzylmethacrylamid, 29,6 g Methylacrylat und 8,9 g 2-Ethylhexylthioglykolat, über eine Zeitdauer von 2 Stunden zudosiert.

Charakterisierung der Dispersion:
Teilchendurchmesser: = 98 nm
Feststoffgehalt: 35 Gew.-%

Der Feststoff wird durch Gefrierkoagulation, Filtration und anschließender Trocknung im Trockenschrank bei 60 Grad C gewonnen.

**Beispiel 2** (Vergleichsbeispiel nach US 4 576 870)

In einem Gemisch aus 80 Gew.-Teilen Methylmethacrylat (MMA) und 10 Gew.-Teilen Phenylmethacrylat werden unter Erwärmen auf 50 Grad C und ständigem Rühren 10 Gew.-Teile 3-(2-Benzotriazolyl)-2-hydroxy-5-tert.-octylbenzylmethacrylamid gelöst. Nach Zugabe von 0,05 Gew.-Teilen tert.-Butylperneodecanoat und 0,03 Gew.-Teilen 2,2-Bis-(t-butylperoxy)butan als Initiatoren sowie 0,3 Gew.-Teile Dodecylmercaptan als Regler wird in einer Polymerisationskammer 7 h bei 50 Grad C und 17 h bei 40 Grad C polymerisiert. Zur Endpolymerisation wird das Polymerisat 12 h bei 110 Grad C getempert. Das mittlere Molekulargewicht wurde zu

$M_w$ = 160.000 und die Glasübergangstemperatur zu Tg = 110 Grad C bestimmt.

**Beispiel 3** (Vergleichsbeispiel)

Ein Gemisch aus 80 Gew.-Teilen MMA und 20 Gew.-Teilen Ethylacrylat wird mit 0,05 Gew.-Teilen 2,2'-Azobisisobutyronitril sowie 0,35 Gew.-Teilen Dodecylmercaptan versetzt und im Folienschlauch 12 h bei 50 Grad C polymerisiert. Zur Endpolymerisation wird das Polymerisat 12 h bei 110 Grad C getempert. Das mittlere Molekulargewicht wurde zu $M_w$ = 150.000 und die Glasübergangstemperatur zu Tg = 77 Grad C bestimmt.

**Beispiel 4** (Vergleichsbeispiel)

Als Polymermatrix dient ein Polymethylmethacrylat folgender Herstellung:
Einem Gemisch aus 94 Gew.-Teilen MMA, 5,7 Gew.-Teilen Ethylacrylat und 0,3 Gew.-Teilen Methacrylsäure werden 0,04 Gew.-Teile Dilauroylperoxid sowie 0,62 Gew.-Teile 2-Ethylhexylthioglycolat beigefügt. Die Mischung wird im Folienschlauch 5 h bei 65 Grad C und 27 h bei 55 Grad C polymerisiert. Zur Endpolymerisation wird das Polymerisat 8 h bei 120 Grad C getempert. Das Molekulargewicht wurde zu $M_w$ = 90.000 und die Glasübergangstemperatur zu Tg = 95 Grad C bestimmt.

**Beispiele 5 - 8**

Herstellung der Deckschichten

**Beispiel 5** (erfindungsgemäß)

Das gemäß Beispiel 1 hergestellte Emulsionspolymerisat wird zunächst extrudiert und granuliert. Im anschließenden Coextrusionsschritt wird das Granulat in einem Extrusionswerkzeug mittels einer Mehrkanaldüse auf Polycarbonat-Stegdopppelplatten aufgebracht. Die Dicke der Coextrusionsschicht beträgt 10 - 30 μm.

**Beispiel 6** (Vergleich)

Das gemäß Beispiel 2 hergestellte Polymerisat wird gemahlen und in einem 2. Compoundierschritt extrudiert und granuliert. Die anschließende Coextrusion wird analog Beispiel 5 durchgeführt.

**Beispiel 7** (Vergleich)

Das nach Beispiel 3 hergestellte Polymerisat wird gemahlen und in einem 2. Compoundierschritt extrudiert und granuliert. Dem Granulat werden in einem Trommelmischer 10 Gew.-Teile (bezogen auf die Gesamtmenge) 2-(2-Hydroxy-3,5-diisopropylphenyl)-benztriazol eincompoundiert. Der anschließende Coextrusionsschritt und die Dicke der coextrudierten Schicht werden gemäß Beispiel 5 realisiert.

**Beispiel 8** (Vergleich)

Lackbeschichtung: Die genaue Formulierung lautet:

| | |
|---|---|
| 80 Gew.-Teile | 1-Methoxypropanol-2 |
| 14 Gew.-Teile | Polymethylmethacrylat von Beispiel 4 |
| 6 Gew. -Teile | UV-Absorber ®Cyasorb 531 (2-Hydroxy-4-n-octoxybenzophenon) |

Die Lackformulierung wird mit einem 15 μm Rakel auf die PC-Stegdoppelplatte (SDP) aufgetragen, entsprechend einer Trockenfilmdicke von ca. 3 μm.

**Beispiele 9 - 12**

Bewitterung und Bruchmechanik der nach den Beispielen 5 - 8 beschichteten PC-SDP.

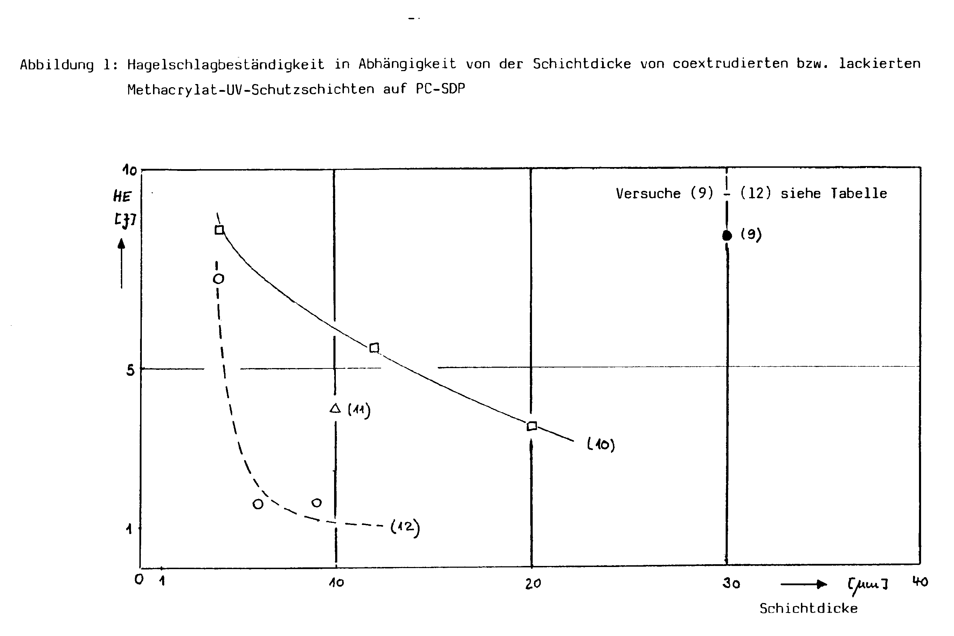

In der folgenden Tabelle sind die Bewitterungsdaten (Bewitterung nach Xenotest) sowie Daten aus dem Hagelschlagversuch als Funktion der Dicke der Deckschicht (siehe auch Abb. 1) für (Meth) acrylat-UV-Schutzschichten aufgeführt.

Tabelle

Eigenschaften der beschriebenen PC-SDP

| Beispiel | Coextrusionsschicht/ Lackschicht nach | Bewitterung im Xenotest (+ unverändert) (h) | Hagelschlagenergie (HE) in (J) bei Bruch als Funktion der Schichtdicke d (μm) d (μm) / HE (J) |
|---|---|---|---|
| 9 | Beispiel 5 | 1000 + | 30 / 8,3 |
| 10 | Beispiel 6 (Vergleich) | 1000 + | 4 / 8,5<br>12 / 5,5<br>20 / 3,5 |
| 11 | Beispiel 7 (Vergleich) | 5000 + | 10 / 4,0 (nach 5 Jahren Freibewitterung) |
| 12 | Beispiel 8 (Vergleich) | 5000 + | 4 / 7,3<br>6 / 1,6<br>9 / 1,6 |

## Patentansprüche

1. Mehrschichtiger Kunststoffkörper mit einer Kernschicht aus mehr als 50 Gew.-% aromatischem Polycarbonat und einer darauf aufgebrachten, UV-Absorber enthaltenden, thermoplastischen, schlagzähmodifizierten Polymethacrylatkunststoffschicht und der noch mit weiteren Schichten belegt sein kann,
dadurch gekennzeichnet,
daß die Polymethacrylatkunststoffschicht ein zweiphasiges Mischpolymerisat ist, die in Mengen von 0,01 bis 50 Gew.-% UV-Absorber bzw. UV-absorbierende Gruppen enthält, und das zweiphasige Mischpolymerisat aus
(A) 10 bis 90 Gew.-% gegebenenfalls vernetzten Polymeren P mit einer Glastemperatur Tg≦10 Grad C, bevorzugt Tg≦-10 Grad C, in das 0 bis 30 Gew.-%, bezogen auf P eines polymerisierbaren UV-Absorbers eingebaut werden kann und
(B) 90 bis 10 Gew.-% eines mit (A) wenigstens teilweise kovalent verknüpften Methylmethacrylat-Copolymerisats mit einer Glastemperatur Tg≧30 Grad C, aufgebaut aus
(b1) 99,9 bis 5 Gew.-%, insbesondere 95 bis 20 Gew.-% Methylmethacrylateinheiten und gegebenenfalls weiteren α,β-ungesättigten Monomereinheiten in Mengen von 0 bis 40 Gew.-%, und
(b2) 0 bis 50 Gew.-% eines polymerisierbaren UV-Absorbers, sowie
(b3) aus 0,1 bis 95 Gew.-%, insbesondere 5 bis 80 Gew.-% Acrylat- und/oder Methacrylateinheiten mit carbocyclischen Gruppen im Esterrest der Formel I

$$H_2C = \overset{\overset{R}{|}}{C} - \overset{\overset{O}{\|}}{C} - O - R_1 \qquad I,$$

worin
R : H oder $CH_3$ und
$R_1$: Y oder A-Y sind, wobei
Y ein Cycloalkyl- oder ein einfach oder mehrfach alkylsubstituierter Cycloalkylrest mit 5 bis 12 C-Atomen, oder ein gegebenenfalls alkyl- bzw. oxyalkyl substituierter Arylrest mit 6 bis 12 C-Atomen und A eine Alkylengruppe, die auch verzweigt sein kann, mit 1 bis 6 C-Atomen oder eine Oxyalkylengruppe mit 2 bis 4 C-Atomen sind, besteht,
wobei das Copolymerisat (B) für sich ein Molekulargewicht $M_w$≧30.000 hätte und eine beliebige Mischung aus aromatischem Polycarbonat (PC) und des Copolymerisates (B) verträglich ist und diese eine untere kritische Lösungstemperatur (LCST) von ≧ 120 Grad C besitzt.

2. Mehrschichtiger Kunststoffkörper nach Anspruch 1, dadurch gekennzeichnet, daß die Polycarbonatkunststoff-Kernschicht eine verträgliche Polymermischung aus 99,9 bis 80 Gew.-% aromatischem Polycarbonat (PC) und 0,1 bis 20 Gew.-% einem oder mehreren Methacrylatcopolymeren (B) und/oder (A) - (B) ist.

3. Verfahren zur Herstellung eines mehrschichtigen Kunststoffkörpers mit einer Kernschicht aus mehr als 50 Gew.-% aromatischem Polycarbonat und einer darauf angebrachten UV-Absorber enthaltenden, thermoplastischen Polymethacrylatkunststoffschicht, und der noch mit weiteren Schichten belegt sein kann, dadurch gekennzeichnet, daß die UV-Absorber enthaltende, thermoplastische Polymethacrylatkunststoffschicht ein schlagzähmodifiziertes, mit dem aromatischen Polycarbonat verträgliches Polymethacrylatcopolymerisat ist und durch Coextrusion in Schichtdicken von 1 bis 500 μm auf die Kernschicht aufgebracht wird.

4. Verfahren zur Herstellung eines mehrschichtigen Kunststoffkörpers mit einer Kernschicht aus mehr als 50 Gew.-% aromatischem Polycarbonat und einer darauf angebrachten UV-Absorber enthaltenden, thermoplastischen Polymethacrylatkunststoffschicht, und der noch mit weiteren Schichten belegt sein kann, dadurch gekennzeichnet, daß die UV-Absorber enthaltende, thermoplastische Polymethacrylatkunststoffschicht ein schlagzähmodifiziertes, mit dem aromatischen Polycarbonat verträgliches Polymethacrylatcopolymerisat ist und durch Lackierung auf die Kernschicht in Schichtdicken von 1 bis 500 μm aufgebracht wird.

5. Verfahren zur Herstellung eines mehrschichtigen Kunststoffkörpers nach den Ansprüchen 3 oder 4, dadurch gekennzeichnet, daß dabei ein mehrschichtiger Kunststoffkörper der Ansprüche 1 bzw. 2 erhalten wird.

6. Verfahren zur Herstellung eines mehrschichtigen Kunststoffkörpers nach den Ansprüchen 3 bis 5, dadurch gekennzeichnet, daß die Polymethacrylatkunststoffschicht in Schichtdicken von 1 bis 50 μm auf den Polycarbonatkunststoff aufgetragen wird.

## Claims

1. A multi-layered plastics body having a core layer consisting of more than 50 wt.-% of aromatic polycarbonate and, applied thereto, a thermoplastic, impact strength-modified polymethacrylate plastics layer containing UV-absorbers, which may also be coated with additional layers, characterised in that the polymethacrylate plastics layer is a two-phase mixed polymer which contains UV-absorbers or UV-absorbing groups in amounts of from 0.01 to 50 wt.-%, and the two-phase mixed polymer consists of

(A) 10 to 90 wt.-% of optionally cross-linked polymers P having a glass transition temperature Tg $\leqq$10°C, preferably Tg $\leqq$-10°C, in which 0 to 30 wt.-%, based on P, of a polymerisable UV-absorber may be incorporated, and

(B) 90 to 10 wt.-% of a methylmethacrylate copolymer having a glass temperature Tg $\geq$30°C which is at least partially covalently linked, synthesised from

(b1) 99.9 to 5 wt.-%, more particularly 95 to 20 wt.-% of methylmethacrylate units and optionally other $\alpha,\beta$-unsaturated monomer units in amounts from 0 to 40 wt.-%, and

(b2) 0 to 50 wt.-% of a polymerisable UV-absorber, and

(b3) 0.1 to 95 wt.-%, more particularly 5 to 80 wt.-% of acrylate and/or methacrylate units having carbocyclic groups in the ester radical of formula I

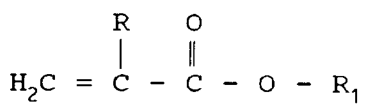

I,

wherein
R represents H or $CH_3$ and
$R_1$ represents Y or A-Y, whilst
Y is a cycloalkyl or a monoalkyl- or polyalkyl-substituted $C_{5-12}$-cycloalkyl group, or an optionally alkyl- or oxyalkyl-substituted $C_{6-12}$-aryl group and A is a $C_{1-6}$-alkylene group, which may also be branched, or a $C_{2-4}$-oxyalkylene group, whilst the copolymer (B) per se has a molecular weight $M_w \geqq$30,000 and any desired mixture of aromatic polycarbonate (PC) and the copolymer (B) is compatible and this mixture has a lower critical solution temperature (LCST) of $\geqq$120°C.

2. Multi-layered plastics body according to claim 1, characterised in that the polycarbonate plastics core layer is a compatible polymer mixture of 99.9 to 80 wt.-% of aromatic polycarbonate (PC) and 0.1 to 20 wt.-% of one or more methacrylate copolymers (B) and/or (A) - (B).

3. Process for preparing a multi-layered plastics body having a core layer consisting of more than 50 wt.-% of aromatic polycarbonate and, applied thereto, a thermoplastic polymethacrylate plastics layer containing UV-absorbers, which may also be coated with additional layers, characterised in that the thermoplastic polymethacrylate plastics layer containing UV-absorbers is an impact strength-modified polymethacrylate copolymer which is compatible with the aromatic polycarbonate and is applied to the core layer by coextrusion in layer thicknesses of from 1 to 500 μm.

4. Process for preparing a multi-layered plastics body having a core layer consisting of more than 50 wt.-% of aromatic polycarbonate and, applied thereto, a thermoplastic polymethacrylate plastics layer containing UV-absorbers, which may also be coated with additional layers, characterised in that the thermoplastic polymethacrylate plastics layer containing UV-absorbers is an impact strength-modified polymethacrylate copolymer which is compatible with the aromatic polycarbonate and is applied to the core layer by painting on in layer thicknesses of from 1 to 500 μm.

5. Process for preparing a multi-layered plastics body according to claim 3 or 4, characterised in that a multi-layered plastics body according to claim 1 or 2 is thus obtained.

6. Process for preparing a multi-layered plastics body according to claims 3 to 5, characterised in that the polymethacrylate plastics layer is applied to the polycarbonate plastics in layer thicknesses of from 1 to 50 μm.

## Revendications

1. Corps de matière plastique multicouche, comprenant une couche d'âme qui est composée de plus de 50% en poids de polycarbonate aromatique et sur laquelle est appliquée une couche de plastique de polyméthacrylate thermoplastique, modifié dans le sens de la résistance au choc et contenant un absorbant d'UV, ce

corps pouvant être garni d'autres couches, caractérisé en ce que la couche de plastique de polyméthacrylate est un copolymère à deux phases qui contient, dans des proportions de 0,01 à 50% en poids, un absorbant d'UV ou des groupements absorbant les UV, et en ce que le copolymère à deux phases se compose de:

(A) 10 à 90/% en poids de polymère P éventuellement réticulé, ayant une température de transition vitreuse Tg ≦ 10 C, de préférence Tg ≦ -10 C, dans lequel peuvent être incorporés 0 à -30% en poids, par rapport à P, d'un absorbant d'UV polymérisable, et

(B) 90 à 10% en poids d'un copolymère de méthacrylate de méthyle uni au moins partiellement par liaison covalente à (A), ayant une température de transition vitreuse Tg ≥ 30°C, constitué par

(b1) 99,9 à 5% en poids, en particulier 95 à 20% en poids de motifs méthacrylate de méthyle et éventuellement d'autres motifs monomères $\alpha,\beta$-insaturés dans des proportions de 0 à 40% en poids, et

(b2) 0 à 50% en poids d'un absorbant d'UV polymérisable, ainsi que par

(b3) 0,1 à 95% en poids, en particulier 5 à 80% en poids de motifs acrylate et/ou méthacrylate comportant des groupements carbocycliques dans le reste ester de formule I

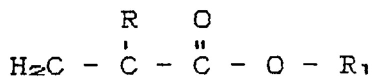

I

dans laquelle

R : représente H ou $CH_3$ et

$R_1$: représente Y ou A-Y,

Y étant un reste cycloalkyle non substitué ou alkyl-substitué une ou plusieurs fois à 5-12 atomes de carbone ou un reste aryle éventuellement alkyl- ou oxyalkylsubstitué à 6-12 atomes de carbone, et A étant un groupement alkylène, qui peut aussi être ramifié, à 1-6 atomes de carbone ou un groupement oxyalkylène à 2-4 atomes de carbone,

le copolymère (B) ayant en soi un poids moléculaire $M_w$ ≧ 30 000, un mélange quelconque de polycarbonate aromatique (PC) et du copolymère (B) étant compatible et ce mélange ayant une température de dissolution critique inférieure (LCST) ≧ 120C.

2. Corps de matière plastique multicouche selon la revendication 1, caractérisé en ce que la couche d'âme en plastique de polycarbonate est un mélange de polymères compatible, composé de 99,9 à 80% en poids de polycarbonate aromatique (PC) et de 0,1 à 20% en poids d'un ou de plusieurs copolymères de méthacrylate (B) et/ou (A) - (B).

3. Procédé de fabrication d'un corps de matière plastique multicouche, comprenant une couche d'âme qui est composée de plus de 50% en poids de polycarbonate aromatique et sur laquelle est appliquée une couche de plastique de polyméthacrylate thermoplastique, contenant un absorbant d'UV, ce corps pouvant être garni d'autres couches, caractérisé en ce que la couche de plastique de polyméthacrylate thermoplastique, contenant un absorbant d'UV, est un copolymère de polyméthacrylate compatible avec le polycarbonate aromatique et modifié dans le sens de la résistance au choc, appliqué par co-extrusion en une épaisseur de couche de 1 à 500 µm sur la couche d'âme.

4. Procédé de fabrication d'un corps de matière plastique multicouche, comprenant une couche d'âme qui est composée de plus de 50% en poids de polycarbonate aromatique et sur laquelle est appliquée une couche de plastique de polyméthacrylate thermoplastique, contenant un absorbant d'UV, ce corps pouvant être garni d'autres couches, caractérisé en ce que la couche de plastique de polyméthacrylate thermoplastique, contenant un absorbant d'UV, est un copolymère de polyméthacrylate compatible avec le polycarbonate aromatique et modifié dans le sens de la résistance au choc, appliqué par laquage en une épaisseur de couche de 1 à 500 µm sur la couche d'âme.

5. Procédé de fabrication d'un corps de matière plastique multicouche selon la revendication 3 ou 4, caractérisé en ce qu'il est ainsi obtenu un corps de matière plastique multicouche selon la revendication 1 ou 2.

6. Procédé de fabrication d'un corps de matière plastique multicouche selon l'une quelconque des revendications 3 à 5, caractérisé en ce que la couche de plastique de polyméthacrylate est appliquée en une épaisseur de couche de 1 à 50 µm sur la matière plastique de polycarbonate.

Abbildung 1: Hagelschlagbeständigkeit in Abhängigkeit von der Schichtdicke von coextrudierten bzw. lackierten Methacrylat-UV-Schutzschichten auf PC-SDP